# EUROPÄISCHE PATENTANMELDUNG

(11) **EP 2 394 509 A1**
(43) Veröffentlichungstag der Anmeldung: **14.12.2011**
(21) Anmeldenummer: 11004476.5
(22) Anmeldetag: 01.06.2011
(51) Int. Cl.: A01K 9/00

(54) **Kälber-Trinkflasche**

(30) Priorität: 08.06.2010 DE 202010007722 U
(71) Anmelder: Holm, Hans-Joachim, 24784 Westerrönfeld (DE)
(72) Erfinder: Holm, Hans-Joachim, 24784 Westerrönfeld (DE)
(74) Vertreter: Werner, Richard

(57) **Zusammenfassung**

Kälber-Trinkflasche (10) mit einer unteren Öffnung (12) zur Verbindung mit einem Trinksauger (14), einer oberen Öffnung (22) zum Befüllen der Trinkflasche und einem Deckel (24) zum Verschließen der oberen Öffnung, wobei der Deckel so ausgebildet ist, dass er mit einer Befülleinrichtung aufgestoßen werden kann und sich beim Entfernen der Befülleinrichtung von der Trinkflasche selbsttätig wieder schließt.

## Beschreibung

Die Erfindung betrifft eine Kälber-Trinkflasche mit einer unteren Öffnung zur Verbindung mit einem Trinksauger, einer oberen Öffnung zum Befüllen der Trinkflasche und einem Deckel zum Verschließen der oberen Öffnung sowie eine Kälber-Trinkflasche mit einem an der Trinkflasche unter einem Winkel befestigten Trinksauger.

Kälber werden mit festem oder flüssigem Futter, insbesondere mit Milch, gefüttert. Beides kann über einen Trinksauger verabreicht werden, an dem das Kalb saugen und nuckeln kann. Zu diesem Zweck ist die Verwendung von Eimern mit einem in einem unteren Bereich angeordneten Trinksauger bekannt. Diese Eimer bleiben in der Regel oben offen, was hygienisch unvorteilhaft ist. Ebenfalls bekannt sind Trinkflaschen, die mit einem Trinksauger verbindbar sind. Bekannt sind Trinkflaschen mit einer einzigen Öffnung, durch die das Futter, insbesondere die Milch, eingefüllt wird. Nach dem Befüllen wird ein Trinksauger mit der Öffnung verbunden und die Trinkflasche wird "über Kopf", also mit dem Trinksauger nach unten, an einer Kälberbox befestigt, so dass das Kalb den Trinksauger gut erreichen kann. Ebenfalls bekannt sind Trinkflaschen mit einer unteren Öffnung zur Verbindung mit einem Trinksauger und einer oberen Öffnung zum Befüllen, die nach dem Befüllen mit einem Deckel verschlossen wird. Die Deckel werden von Hand aufgeschraubt oder weisen einen umlaufenden Rand auf, der ebenfalls von Hand über einen oberen Öffnungsrand der Trinkflasche gestülpt wird.

Das Befüllen der Trinkflaschen erfolgt zumeist in einem gesonderten Raum mit einer Abfüllstation, wo die Trinkflaschen gegebenenfalls auch gereinigt werden. Bei großen landwirtschaftlichen Betrieben müssen täglich mehrere tausend Trinkflaschen befüllt werden, was mit einem erheblichen manuellen Arbeitsaufwand einhergeht. Die befüllten Trinkflaschen werden anschließend mit Hand- oder Kraftwagen zu den Kälberboxen transportiert und nach Ende der Fütterung von dort wieder abgeholt. Auch hierfür entsteht ein erheblicher Arbeitsaufwand.

Davon ausgehend ist es die Aufgabe der Erfindung, eine Kälber-Trinkflasche zur Verfügung zu stellen, die eine den hygienischen Anforderungen gerecht werdende Fütterung der Kälber mit geringerem Arbeitsaufwand ermöglicht.

Diese Aufgabe wird gelöst durch die Kälber-Trinkflasche mit den Merkmalen des Anspruchs 1. Vorteilhafte Ausgestaltungen sind in den sich anschließenden Unteransprüchen angegeben.

Die erfindungsgemäße Kälber-Trinkflasche hat eine untere Öffnung zur Verbindung mit einem Trinksauger, eine obere Öffnung zum Befüllen der Trinkflasche und einen Deckel zum Verschließen der oberen Öffnung, wobei der Deckel so ausgebildet ist, dass er mit einer Befülleinrichtung aufgestoßen werden kann und sich beim Entfernen der Befülleinrichtung von der Trinkflasche selbsttätig wieder schließt.

Der Trinksauger wird mit der unteren Öffnung verbunden, insbesondere kann er auf einen im Bereich der unteren Öffnung ausgebildeten Anschlussstutzen aufgesteckt, aufgeschoben, eingesetzt oder aufgeschraubt werden.

Die obere Öffnung zum Befüllen kann einen relativ großen Öffnungsdurchmesser beispielsweise von 50 % des größten Durchmessers der Trinkflasche aufweisen. Die Trinkflasche besteht beispielsweise aus Kunststoff. Sie kann ein Volumen von beispielsweise 2 bis 5 Litern aufweisen. Sie kann eine langgestreckte Form haben und einen im Wesentlichen kreisförmigen oder quadratischen/rechteckigen Querschnitt aufweisen. Die untere Öffnung kann an einem tiefsten Punkt der Trinkflasche angeordnet sein, wobei die Wandungen der Trinkflasche zu der unteren Öffnung hin schräg aufeinander zulaufen können.

Die Richtungsangaben unten/oben, seitlich usw. beziehen sich stets auf eine bevorzugte Anwendungsposition der Trinkflasche, in der ein mit der unteren Öffnung verbundener Trinksauger unten und für ein Kalb gut zugänglich ist.

Der Deckel dient zum Verschließen der oberen Öffnung, dass heißt, er schützt das Innere der Trinkflasche im geschlossenen Zustand vor Verunreinigungen durch Umwelteinflüsse wie Regen, Vogelkot, Insekten, usw. Der Verschluss kann vollständig oder annährend luft- und/oder flüssigkeitsdicht sein, dies ist jedoch nicht zwingend erforderlich.

Der Deckel ist so ausgebildet, dass er mit einer Befülleinrichtung aufgestoßen werden kann. Die Befülleinrichtung kann insbesondere ein Befüllrohr oder eine Zapfpistole sein, über das bzw. die das Futter aus einem Vorratsbehälter in die Trinkflasche eingefüllt wird. Geeignet sind beispielsweise sogenannte Milchwagen, d. h. hand- oder motorangetriebene Wagen mit einem Vorratsbehälter für Milch oder dergleichen mit einem Fassungsvermögen von beispielsweise 300 Litern oder mehr. Derartige Milchwagen können eine Pumpe aufweisen, mit der die Milch oder sonstiges Futter aus dem Vorratsbehälter über eine Rohrleitung oder einen Schlauch zur Befülleinrichtung befördert wird. Mit einer derartigen Befülleinrichtung kann der Deckel aufgestoßen werden, d. h. insbesondere durch Schieben oder Drücken mit der Befülleinrichtung in eine geöffnete Stellung verlagert werden. Der Deckel muss also nicht wie herkömmliche Deckel in einem gesonderten Arbeitsgang von Hand von dem oberen Öffnungsrand gelöst werden. Der Deckel kann allein durch Aufstoßen mit der Befülleinrichtung geöffnet werden, ohne dass er mit der Hand berührt werden müsste.

Nach dem Entfernen der Befülleinrichtung von der Trinkflasche kehrt der Deckel selbsttätig wieder in eine geschlossene Stellung zurück. In dieser Stellung verbleibt er, bis er erneut aufgestoßen wird.

Der erfindungsgemäße Deckel ist besonders einfach zu öffnen und schließt sich selbsttätig, so dass das Befüllen wesentlich vereinfacht wird. Der Deckel ist speziell ausgelegt für die Anlieferung der Milch zu der an einer Kälberbox verbleibenden Trinkflasche. Bei dieser Arbeitsweise entfällt der Hin- und Rücktransport der Trinkflaschen zu einer Befüllstation.

Das Befüllen vereinfacht sich erheblich, weil der Deckel nicht von Hand geöffnet und wieder geschlossen werden muss. Insbesondere ist es möglich, mit einem Milchwagen von Kälberbox zu Kälberbox zu fahren und die vorgesehene Futtermenge mit der Befülleinrichtung in die Trinkflasche zu dosieren bzw. einzufüllen, ohne Hand an die Trinkflasche anlegen zu müssen. Insbesondere ist es möglich, dabei auf einem Mitfahrwagen, der für die Verteilung des Futters eingesetzt wird, sitzen zu bleiben. Somit kann das Befüllen beinahe "im Vorbeifahren" erledigt werden. Durch den stets gewährleisteten Verschluss der oberen Öffnung der Trinkflasche ist diese Vorgehensweise zudem besonders hygienisch. Bei Bedarf ist auch eine einfache Reinigung der Trinkflasche einschließlich des Deckels möglich, sei es durch Austauschen der Trinkflasche und reinigen beispielsweise in einer Spülmaschine oder durch Spülen der Trinkflasche an der Kälberbox.

Gegenüber dem bekannten Vorgehen, gefüllte Trinkflaschen zu den Kälberboxen zu transportieren und an denselben in einer Trinkposition zu befestigen, besteht eine weitere Arbeitserleichterung darin, dass keine schweren, gefüllten Trinkflaschen gehandhabt werden müssen. Von Hand zu bewegen ist lediglich eine kompakte und einfach zu handhabende Befülleinrichtung.

In einer Ausgestaltung liegt der Deckel im geschlossenen Zustand an einem Rand der oberen Öffnung der Trinkflasche an und/oder steht seitlich über einen Rand der oberen Öffnung über und/oder umschließt einen Rand der oberen Öffnung seitlich. Durch die genannten Ausführungen wird der obere Rand der Trinkflasche zuverlässig abgedeckt und verschlossen und insbesondere vor einer Verunreinigung von oben geschützt. Gleichzeitig ist ein einfaches Öffnen des Deckels möglich.

In einer Ausgestaltung weist der Deckel einen im geschlossenen Zustand von der Trinkflasche vorstehenden Betätigungsabschnitt zum Aufstoßen mit der Befülleinrichtung auf, der so angeordnet ist, dass er für die Befülleinrichtung einfach zugänglich und in eine Öffnungsrichtung des Deckels bewegbar ist. Der Betätigungsabschnitt kann relativ groß ausgebildet sein und Abmessungen von beispielsweise 3 cm x 8 cm oder mehr aufweisen, damit er einfach mit der Befülleinrichtung betätigt werden kann.

In einer Ausgestaltung steht der Betätigungsabschnitt im geschlossenen Zustand der Trinkflasche von einem seitlichen Rand des Deckels schräg nach außen und oben vor. Bei dieser Anordnung kann der Betätigungsabschnitt besonders einfach mit der Befülleinrichtung nach oben und zu einer Mittelachse der Trinkflasche hin bewegt werden, um die obere Öffnung frei zu geben.

In einer Ausgestaltung weist der Betätigungsabschnitt eine konkav gekrümmte Betätigungsfläche auf. Diese kann mit der Befülleinrichtung zusammenwirken, wobei durch die konkave Form ein Abrutschen der Befülleinrichtung von der Betätigungsfläche vermieden wird.

In einer Ausgestaltung ist der Deckel über ein Gelenk mit einer Drehachse angelenkt, wobei das Gelenk die Richtung einer Schwenkbewegung des Deckels vorgibt. Dadurch kann der Deckel besonders einfach mit der Befülleinrichtung aufgestoßen werden.

In einer Ausgestaltung ist ein elastisches Element vorhanden und das selbsttätige Verschließen erfolgt aufgrund einer von dem elastischen Element auf den Deckel ausgeübten Kraft. Das elastische Element kann beispielsweise eine Feder oder ein Gummizug sein. Alternativ kann statt eines elastischen Elements auch ein Seilzug, der von einem Gewicht durch Schwerkraft betätigt wird, oder durch ein starr mit dem Deckel verbundenes Gegengewicht, bevorzugt auf einer dem Deckel gegenüberliegenden Seite der Drehachse eines Gelenks, mit einer Kraft in die geschlossene Stellung beaufschlagt werden. Bei den genannten Möglichkeiten handelt es sich um einfache Lösungen, die ein zuverlässiges selbsttätiges Schließen des Deckels ermöglichen.

In einer Ausgestaltung besteht der Deckel aus einem elastisch verformbaren Material und das selbsttätige Verschließen erfolgt aufgrund der Elastizität des Materials und/oder der Schwerkraft des Deckels. Beispielsweise kann es sich bei dem elastisch verformbaren Material um Gummi oder ein sonstiges Elastomer handeln, insbesondere um eine robuste Gummimatte mit einer Dicke von einigen Millimetern oder mehr. Im unverformten Zustand kann der Deckel eine dem Rand der oberen Öffnung der Trinkflasche angepasste Form aufweisen, so dass er nach einer Verformung automatisch in eine geschlossene Stellung zurückkehrt. Dies kann durch die Schwerkraft unterstützt werden. Im Falle einer relativ dick ausgeführten Gummimatte wirken die beiden Mechanismen vorteilhaft zusammen, so dass eine besonders zuverlässige und einfache Lösung erzielt wird.

In einer Ausgestaltung ist der Deckel mit einem Befestigungsabschnitt verbunden, der an einem Rand der oberen Öffnung befestigtbar ist. Der Befestigungsabschnitt kann beispielsweise ringförmig sein und den Rand der oberen Öffnung umschließen. Er kann mittels einer Schraubverbindung mit dem Rand verbunden sein. Eine einfache Alternative ist eine Schnappverbindung. Mit Hilfe des Befestigungsabschnitts kann der Deckel in einfacher Weise an der Trinkflasche befestigt werden. Gegebenenfalls ist auch ein einfacher Austausch des Deckels möglich.

In einer Ausgestaltung sind der Deckel und der Befestigungsabschnitt einteilig aus einem elastischen Material gefertigt. Beispielsweise können der Deckel und der Befestigungsabschnitt aus einem elastischen Material bestehen, so dass der Befestigungsabschnitt beispielsweise ringförmig den Öffnungsrand umschließen und kraftschlüssig daran fixiert werden kann, wobei der Deckel beispielsweise in einem einige Zentimeter langen Abschnitt in den Befestigungsabschnitt übergeht.

In einer Ausgestaltung liegt der Deckel im geschlossenen Zustand an einer Innenseite eines Rands der oberen Öffnung an und öffnet sich in die Trinkflasche hinein. Der Deckel kann beispielsweise als in die Trinkflasche hinein schwenkende Klappe ausgeführt sein. Diese kann insbesondere von oben mit der Befülleinrichtung nach unten gedrückt werden, um die Öffnung frei zu geben und das Futter in die Trinkflasche einfüllen zu können.

In einer Ausgestaltung ist eine an einer Wand oder an einem Gitter einer Kälberbox befestigbare Flaschenhalterung vorhanden, die die Flasche in einer Trinkposition hält, in der ein mit der unteren Öffnung verbundener Trinksauger für ein Kalb einfach erreichbar ist. Die Flaschenhalterung kann einen an der Trinkflasche befestigten oder einteilig mit dieser ausgebildeten Halteabschnitt aufnehmen, wobei der Halteabschnitt von oben in die Halterung eingesetzt werden kann. Alternativ kann die Flaschenhalterung die Trinkflasche umschließen, so dass die Trinkflasche in die Halterung eingesetzt werden kann, beispielsweise von oben.

In einer Ausgestaltung weist der Deckel eine der vorstehend erläuterten Ausgestaltungen auf, wirkt jedoch nicht in der vorstehend beschriebenen Weise mit einem Rand der oberen Öffnung, sondern stattdessen mit einem oberen Rand der Flaschenhalterung zusammen. Beispielsweise liegt der Deckel an einem oberen Rand der Flaschenhalterung an, oder ein Befestigungsabschnitt des Deckels ist an einem oberen Rand der Flaschenhalterung befestigbar. Bei dieser Lösung ist der Deckel der Flaschenhalterung zugeordnet und die Trinkflasche kann beispielsweise unabhängig von dem Deckel entnommen und gereinigt werden.

Bei den eingangs geschilderten herkömmlichen Trinkflaschen verläuft eine Längsachse des Trinksaugers in der Regel in der gleichen Richtung wie eine Längsachse der Trinkflasche. Um den Trinksauger in eine für ein Kalb gut erreichbare Position zu bringen, werden derartige Trinkflaschen in einer gegenüber der Vertikalen geneigten Stellung befestigt, beispielsweise durch eine in einem 45-Grad-Winkel zu einer Wand oder einem Gitter der Kälberbox ausgerichtete Aufnahme einer Flaschenhalterung, in die Trinkflasche eingesetzt wird. Bei anderen herkömmlichen Trinkflaschen ist eine Längsachse des Trinksaugers gegenüber einer Längsachse der Trinkflasche geneigt, so dass die Trinkflasche in einer annähernd vertikalen Stellung befestigt werden kann. Der Trinksauger befindet sich dann in einer schrägen Stellung, die für ein Kalb gut erreichbar ist. In beiden skizzierten Fällen steht der Trinksauger jedoch seitlich über die Trinkflasche über, so dass es häufig zu einer Verschmutzung des Trinksaugers kommt, insbesondere durch herab fallenden Vogelkot oder das Hinterteil eines Kalbs, das den Trinksauger ebenfalls mit Kot, Stroh oder sonstigen Verschmutzungen verunreinigen kann.

Davon ausgehend ist es eine weitere Aufgabe, eine Kälber-Trinkflasche mit einem Trinksauger zur Verfügung zu stellen, die eine Fütterung unter verbesserten hygienischen Verhältnissen ermöglicht.

Diese Aufgabe wird gelöst durch die Kälber-Trinkflasche mit den am Ende der Beschreibung im Absatz 1 aufgeführten Merkmalen. Vorteilhafte Ausgestaltungen sind in den sich anschließenden Absätzen angegeben.

Die erfindungsgemäße Kälber-Trinkflasche hat eine Flaschenlängsachse und einen an der Trinkflasche befestigten Trinksauger, der eine Saugerlängsachse aufweist, die in einem Winkel von 30 Grad oder mehr gegenüber der Flaschenlängsachse geneigt ist, wobei der Trinksauger so angeordnet ist, dass er sich bei vertikaler Anordnung der Flaschenlängsachse vollständig unterhalb der Trinkflasche befindet.

Durch die genannte Anordnung ist der Trinksauger auf einfache Weise vor einer Verschmutzung von oben geschützt. Auch eine seitliche Berührung des Trinksaugers, etwa durch ein Hinterteil eines Kalbs, wird vermieden, da das Kalb vor einer Berührung des Trinksaugers in der Regel an einen seitlich über den Trinksauger überstehenden Bereich der Trinkflasche stoßen wird.

Die Erfindung beruht auf der Erkenntnis, dass ein Sauberhalten des Trinksaugers selbst von besonderer Bedeutung ist und dass Verschmutzungen der vorstehend erläuterten Art des Trinksaugers zu Erkrankungen des Tiers führen können. Es wird auf einfache Weise Abhilfe geschaffen.

Die Flaschenlängsachse ist insbesondere die Symmetrieachse eines im Wesentlichen zylindrischen oder rotationssymmetrischen Flaschenabschnitts. Die Richtung der Saugerlängsachse wird ebenfalls von der im Wesentlichen rotationssymmetrischen bzw. zylindrischen Form des Saug- und/oder Nuckelabschnitts des Trinksaugers definiert. Die Saugerlängsachse ist gegenüber der Flaschenlängsachse um 30 Grad oder mehr geneigt, beispielsweise auch um 45 Grad oder 60 Grad oder mehr.

In einer Ausgestaltung weist die Trinkflasche einen Anschlussstutzen auf, an dem der Trinksauger befestigt ist, wobei der Anschlussstutzen gegenüber der Flaschenlängsachse versetzt angeordnet ist und sich an einem tiefsten Punkt der Trinkflasche befindet, wenn die Flaschenlängsachse vertikal ausgerichtet ist. Der Trinksauger kann in der eingangs genannten Art an dem Anschlussstutzen befestigt sein, das heißt insbesondere durch Aufstecken, Aufschieben, Einsetzen oder Aufschrauben. Die Anordnung des Anschlussstutzens an einem tiefsten Punkt der Trinkflasche führt zu einer weitestgehend vollständigen Entleerung der Trinkflasche. Auch dies ist hygienisch von Vorteil, insbesondere wenn die Trinkflasche nicht nach jeder Fütterung gereinigt, sondern gegebenenfalls einfach erneut befüllt wird.

In einer Ausgestaltung ist der Anschlussstutzen entsprechend der Saugerlängsachse ausgerichtet. Es kann dann ein herkömmlicher Trinksauger verwendet werden und die gewünschte Anordnung des Trinksaugers ist allein durch die Anordnung und Ausrichtung des Anschlussstutzens vorgegeben.

In einer Ausgestaltung ist eine an einer Wand oder an einem Gitter an einer Kälberbox befestigbare Flaschenhalterung vorhanden, die die Flasche in einer

Trinkposition hält, in der die Flaschenlängsachse annährend vertikal ausgerichtet ist. Mit einer solchen Flaschenhalterung werden die vorstehend erläuterten Vorteile erreicht.

In einer Ausgestaltung weist die Flaschenhalterung in einem unteren Bereich eine längliche Öffnung auf, durch die der Trinksauger beim Einsetzen der Flasche in die Flaschenhalterung in seiner gegenüber der Flaschenlängsachse geneigten Stellung hindurchführbar ist. Demnach kann die Trinkflasche problemlos in die Flaschenhalterung eingesetzt werden, nachdem der Trinksauger bereits an der Trinkflasche befestigt ist.

In einer Ausgestaltung weist die Trinkflasche mit der besonderen Anordnung des Trinksaugers einen Deckel gemäß einem der vorstehend erläuterten Merkmale auf. Dadurch werden die Vorteile des besonderen Deckels mit denen der besonderen Saugeranordnung kombiniert. Es kommt dabei zu besonders vorteilhaften Wechselwirkungen, weil die verbesserte Hygiene im Bereich des Trinksaugers insbesondere beim Wiederbefüllen der Trinkflasche von Bedeutung ist.

Die Erfindung wird nachfolgend anhand von 4 Figuren erläutert. Es zeigen:
- Fig. 1: eine erfindungsgemäße Kälber-Trinkflasche mit einem am oberen Rand der Trinkflasche befestigten Deckel in verschlossenem Zustand,
- Fig. 2: die Trinkflasche aus Figur 1 mit geöffnetem Deckel,
- Fig. 3: ein weiteres Ausführungsbeispiel einer Kälber-Trinkflasche mit einem an einer Flaschenhalterung befestigten Deckel im geschlossenen Zustand,
- Fig. 4: die Trinkflasche aus Figur 3 mit geöffnetem Deckel.

Alle Figuren zeigen vereinfachte Querschnittsdarstellungen. In allen Figuren werden für sich entsprechende Teile die gleichen Bezugszeichen verwendet.

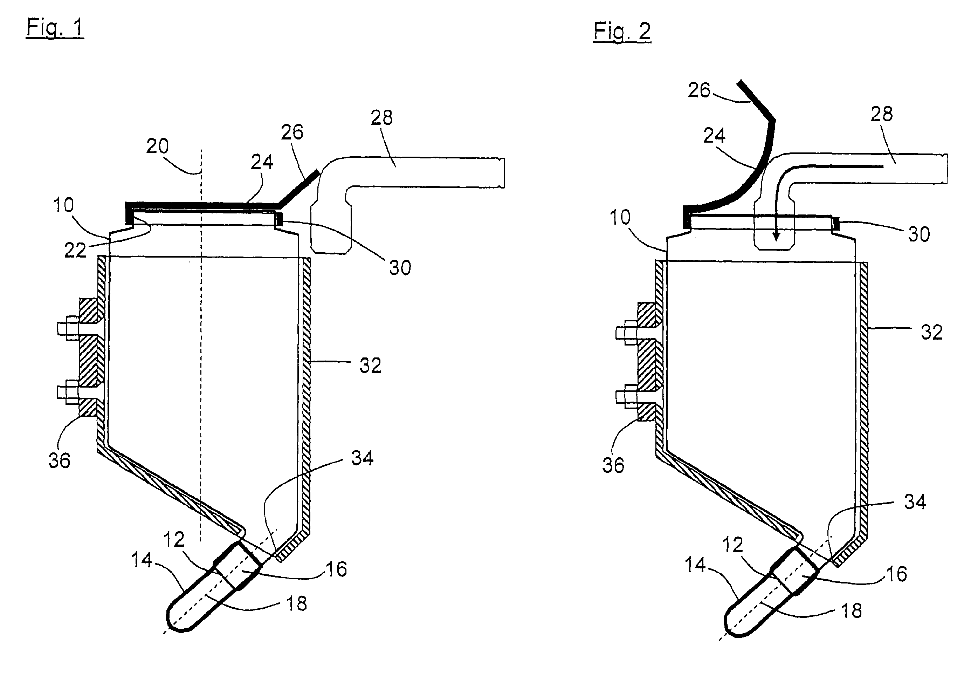

Figur 1 zeigt eine Trinkflasche 10 aus Kunststoff. Die Trinkflasche 10 hat einen im Wesentlichen quadratischen Querschnitt mit stark abgerundeten Ecken. Eine untere Öffnung 12 der Trinkflasche 10 ist mit einem Trinksauger 14 verbunden. Der Trinksauger 14 besteht aus Gummi und ist auf einen Anschlussstutzen 16 der Trinkflasche, welcher die untere Öffnung 12 aufweist, aufgeschoben. Der Anschlussstutzen 16 befindet sich am tiefsten Punkt der Trinkflasche 10, so dass eine vollständige Entleerung der Trinkflasche 10 durch den Trinksauger 14 möglich ist. Der Trinksauger 14 weist eine Saugerlängsachse 18 auf, die gegenüber der Flaschenlängsachse 20 in einem Winkel von ungefähr 45 Grad geneigt ist.

Wie in der Figur 1 unmittelbar erkennbar, ist der Trinksauger 14 vollständig unterhalb der Trinkflasche 10 angeordnet. Eine Verschmutzung des Trinksaugers von oben ist daher ausgeschlossen. Auch eine Verschmutzung durch Berühren des Trinksaugers 14 von der Seite wird weitgehend vermieden.

Die Trinkflasche 10 weist eine obere Öffnung 22 zum Befüllen der Trinkflasche auf. In der Darstellung der Figur 1 ist die obere Öffnung 22 von einem Deckel 24 verschlossen, der auf einem Rand der oberen Öffnung 22 aufliegt. Der Deckel 24 besteht aus einer ungefähr 5 Millimeter dicken Gummimatte, an deren einer Bedienperson zugewandtem Rand ein Betätigungsabschnitt 26 angeordnet ist. Der Betätigungsabschnitt 26 steht schräg nach außen und nach oben vor, so dass er zum Öffnen des Deckels 24 einfach von einer Befülleinrichtung 28 in Form einer Zapfpistole betätigt werden kann.

Der Deckel 24 ist einteilig mit einem ebenfalls aus Gummi bestehenden Befestigungsabschnitt 30 verbunden, der den Rand der oberen Öffnung 22 umschließt.

Weiterhin zeigt Figur 1 eine Flaschenhalterung 32, die ebenfalls aus Kunststoff besteht. Die Flaschenhalterung 32 weist unten eine Öffnung 34 auf, durch die der Anschlussstutzen 16 und der Trinksauger 14 aus der Flaschenhalterung 32 hervorstehen. Der Trinksauger 14 ist daher für ein Kalb frei zugänglich. Die Flaschenhalterung 32 umschließt die Trinkflasche 10 über einen Großteil ihrer Länge von allen Seiten, so dass die Trinkflasche 10 sicher in der Flaschenhalterung 32 gehalten ist. Die Trinkflasche 10 kann einfach nach oben aus der Flaschenhalterung 32 herausgezogen und ebenso einfach von oben wieder in die Flaschenhalterung 32 eingesetzt werden.

Die obere Öffnung 22 weist einen großen Durchmesser auf, der ungefähr 85 % des Durchmessers der Trinkflasche 10 ausmacht.

Die Flaschenhalterung 32 ist mit einem plattenförmigen Verbindungsstück 36 verschraubt, welches an einem nicht dargestellten Gitter oder an einer Wand einer Kälberbox befestigt oder Teil derselben ist.

In der Figur 1 ist gezeigt, wie die Befülleinrichtung 28 gerade in Anlage mit dem Betätigungsabschnitt 26 des Deckels 24 gelangt. Durch weiteres Bewegen der Befülleinrichtung 28 zur Flaschenlängsachse 20 hin bzw. schräg nach oben wird der Deckel 24 aufgestoßen. Hierzu muss der Deckel 24 nicht mit der Hand berührt werden.

In der Darstellung der Figur 2 ist der Deckel 24 soweit geöffnet, dass die Befülleinrichtung oberhalb der oberen Öffnung 22 bzw. in diese hineinragend angeordnet werden kann. In dieser Position kann die Trinkflasche 10 einfach über die Befülleinrichtung 28 befüllt werden, insbesondere mit einer automatischen Dosiervorrichtung. Der Deckel 24 ist in dieser Position gebogen. Nach dem Entfernen der Befülleinrichtung 28 von der Trinkflasche schließt sich der Deckel 24 selbsttätig durch eine elastische Rückverformung des Deckels 24 sowie zusätzlich begünstigt durch die auf den Deckel 24 wirkende Schwerkraft.

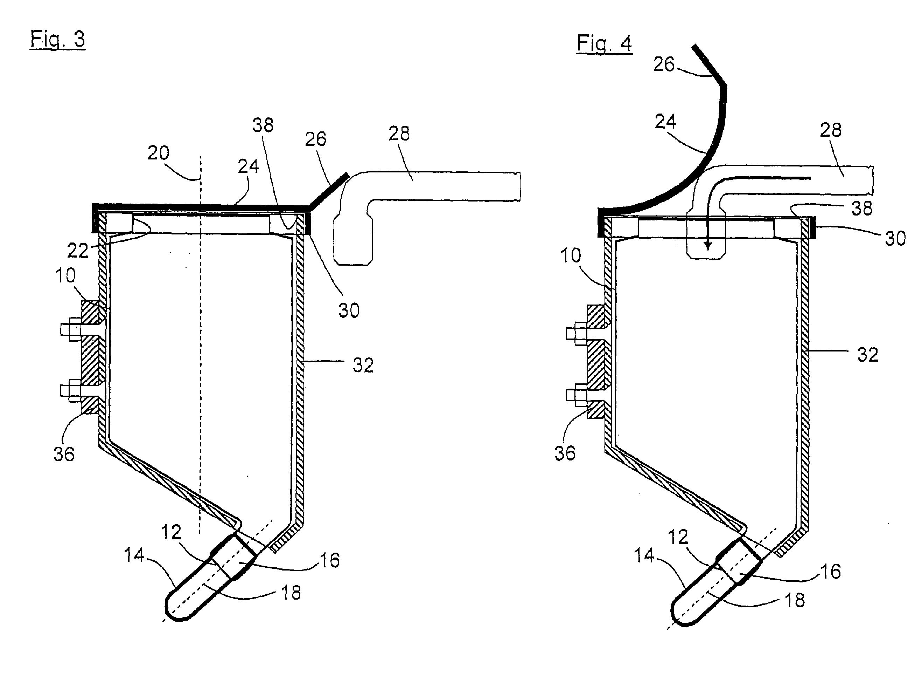

Das Ausführungsbeispiel der Figuren 3 und 4 unterscheidet sich von dem der Figuren 1 und 2 dadurch, dass die Flaschenhalterung 32 sich über die gesamte Länge der Trinkflasche 10 erstreckt und insbesondere annähernd bündig mit dem Rand der oberen Öffnung 22 abschließt. Ein Befestigungsabschnitt des Deckels 24 umschließt einen oberen Randabschnitt 38 der Flaschenhalterung 32 von außen. Er ist mit dem Deckel 24 einteilig ausgebildet. Auch in dieser Ausgestaltung wird die obere Öffnung 22 zuverlässig und selbsttätig von dem Deckel 24 verschlossen. Figur 4 zeigt eine geöffnete Stellung des Deckels 24, wobei die Ausführungen zum ersten Ausführungsbeispiel der Figuren 1 und 2 analog gelten.

### Weitere Beispiele für eine Trinkflasche sind nachfolgend aufgeführt:

1. Kälber-Trinkflasche mit einer Flaschenlängsachse (20) und einem an der Trinkflasche befestigten Trinksauger (14), der eine Saugerlängsachse (18) aufweist, die in einem Winkel von 30 Grad oder mehr gegenüber der Flaschenlängsachse (20) geneigt ist, wobei der Trinksauger (14) so angeordnet ist, dass er sich bei vertikaler Anordnung der Flaschenlängsachse (20) vollständig unterhalb der Trinkflasche befindet.
2. Trinkflasche nach Absatz 1, dadurch gekennzeichnet, dass die Trinkflasche einen Anschlussstutzen (16) aufweist, an dem der Trinksauger (14) befestigt ist, wobei der Anschlussstutzen (16) gegenüber der Flaschenlängsachse (20) versetzt angeordnet ist und sich an einem tiefsten Punkt der Trinkflasche befindet, wenn die Flaschenlängsachse (20) vertikal ausgerichtet ist.
3. Trinkflasche nach Absatz 1 oder 2, dadurch gekennzeichnet, dass der Anschlussstutzen (16) entsprechend der Saugerlängsachse (18) ausgerichtet ist.
4. Trinkflasche nach einem der Absätze 1 bis 3, dadurch gekennzeichnet, dass eine an einer Wand oder an einem Gitter einer Kälberbox befestigbare Flaschenhalterung (32) vorhanden ist, die die Trinkflasche in einer Trinkposition hält, in der die Flaschenlängsachse (20) annähernd vertikal ausgerichtet ist.
5. Trinkflasche nach Absatz 4, dadurch gekennzeichnet, dass die Flaschenhalterung (32) in einem unteren Bereich eine längliche Öffnung aufweist, durch die der Trinksauger (14) beim Einsetzen der Flasche in die Flaschenhalterung (32) in seiner gegenüber der Flaschenlängsachse (20) geneigten Stellung hindurchführbar ist.
6. Trinkflasche nach einem der Absätze 1 bis 5, dadurch gekennzeichnet, dass die Trinkflasche einen Deckel (24) gemäß einem der Merkmale der Ansprüche 1 bis 13 aufweist.

## Patentansprüche

1. Kälber-Trinkflasche mit einer unteren Öffnung (12) zur Verbindung mit einem Trinksauger (14), einer oberen Öffnung zum Befüllen der Trinkflasche und einem Deckel (24) zum Verschließen der oberen Öffnung (22), wobei der Deckel (24) so ausgebildet ist, dass er mit einer Befülleinrichtung (28) aufgestoßen werden kann und sich beim Entfernen der Befülleinrichtung (28) von der Trinkflasche selbsttätig wieder schließt.

2. Trinkflasche nach Anspruch 1, **dadurch gekennzeichnet, dass** der Deckel (24) im geschlossenen Zustand an einem Rand der oberen Öffnung (22) der Trinkflasche anliegt und/oder seitlich über einen Rand der oberen Öffnung (22) übersteht und/oder einen Rand der oberen Öffnung (22) seitlich umschließt.

3. Trinkflasche nach Anspruch 1 oder 2, **dadurch gekennzeichnet, dass** der Deckel (24) einen im geschlossenen Zustand von der Trinkflasche vorstehenden Betätigungsabschnitt (26) zum Aufstoßen mit der Befülleinrichtung (28) aufweist, der so angeordnet ist, dass er für die Befülleinrichtung (28) einfach zugänglich und in eine Öffnungsrichtung des Deckels (24) bewegbar ist.

4. Trinkflasche nach Anspruch 3, **dadurch gekennzeichnet, dass** der Betätigungsabschnitt (26) im geschlossenen Zustand der Trinkflasche von einem seitlichen Rand des Deckels (24) schräg nach außen und oben vorsteht.

5. Trinkflasche nach Anspruch 3 oder 4, **dadurch gekennzeichnet, dass** der Betätigungsabschnitt (26) eine konkav gekrümmte Betätigungsfläche aufweist.

6. Trinkflasche nach einem der Ansprüche 1 bis 5, **dadurch gekennzeichnet, dass** der Deckel (24) über ein Gelenk mit einer Drehachse angelenkt ist, das die Richtung einer Schwenkbewegung des Deckels (24) vorgibt.

7. Trinkflasche nach einem der Ansprüche 1 bis 6, **dadurch gekennzeichnet, dass** ein elastisches Element vorhanden ist und das selbsttätige Verschließen aufgrund einer von dem elastischen Element auf den Deckel (24) ausgeübten Kraft erfolgt.

8. Trinkflasche nach einem der Ansprüche 1 bis 6, **dadurch gekennzeichnet, dass** der Deckel (24) aus einem elastisch verformbaren Material besteht und das selbsttätige Verschließen aufgrund der Elastizität des Materials und/oder der Schwerkraft des Deckels (24) erfolgt.

9. Trinkflasche nach einem der Ansprüche 1 bis 8, **dadurch gekennzeichnet, dass** der Deckel (24) mit einem Befestigungsabschnitt (30) verbunden ist, der an einem Rand der oberen Öffnung (22) befestigbar ist.

10. Trinkflasche nach Anspruch 9, **dadurch gekennzeichnet, dass** der Deckel (24) und der Befestigungsabschnitt (30) einteilig aus einem elastischen Material gefertigt sind.

11. Trinkflasche nach einem der Ansprüche 1 oder 3 bis 10, **dadurch gekennzeichnet, dass** der Deckel (24) im geschlossenen Zustand an einer Innenseite eines Rands der oberen Öffnung (22) anliegt und sich in die Trinkflasche hinein öffnet.

12. Trinkflasche nach einem der Ansprüche 1 bis 11, **dadurch gekennzeichnet, dass** eine an einer Wand oder an einem Gitter einer Kälberbox befestigbare Flaschenhalterung (32) vorhanden ist, die die Trinkflasche in einer Trinkposition hält, in der ein mit der unteren Öffnung (12) verbundener Trinksauger (14) für ein Kalb einfach erreichbar ist.

13. Trinkflasche nach einem der Ansprüche 1 bis 12, **dadurch gekennzeichnet, dass** der Deckel (24) nach einem der Ansprüche 2, 9 oder 11 ausgebildet ist, wobei ein oberer Rand (38) der Flaschenhalterung (32) an die Stelle des Rands der oberen Öffnung (22) der Trinkflasche tritt.
